Europäisches Patentamt

European Patent Office

Office européen des brevets

(19)

(11) Numéro de publication: **0 023 465**

**A1**

(12)

# DEMANDE DE BREVET EUROPEEN

(21) Numéro de dépôt: **80420093.9**

(22) Date de dépôt: **22.07.80**

(51) Int. Cl.³: **H 02 P 7/40**
**F 24 D 19/10**

(30) Priorité: **30.07.79 FR 7919916**
**30.04.80 FR 8010132**
**19.06.80 FR 8013914**

(43) Date de publication de la demande:
**04.02.81 Bulletin 81'5**

(84) Etats Contractants Désignés:
**AT BE CH DE GB IT LI LU NL SE**

(71) Demandeur: **JULIEN ET MEGE**
**22, Boulevard des Tchécoslovaques**
**F-69007 Lyon(FR)**

(72) Inventeur: **Gayral, Marcel**
**29, chemin des Petites Brosses**
**F-69300 Caluire (Rhône)(FR)**

(72) Inventeur: **Roy, Edmond**
**4, rue Feuillat**
**F-69003 Lyon (Rhône)(FR)**

(72) Inventeur: **Roux, Jacqueline épouse Mesmain**
**21, rue des 2 Fermes**
**F-69500 Bron (Rhône)(FR)**

(74) Mandataire· **Maureau, Bernard et al,**
**Cabinet GERMAIN & MAUREAU Le Britannia - Tour C 20,**
**Boulevard Eugène Déruelle**
**F-69003 Lyon(FR)**

(54) **Moyens de réglage électrique de la caractéristique hydraulique d'un circulateur de chauffage central.**

(57) L'invention concerne les circulateurs dont l'entraînement est assuré par un moteur asynchrone monophasé à
capacité permanente.

Les moyens selon l'invention comprennent une impédance résistive et ou capacitive, et ou inductive, insérée en
série avec au moins tout ou partie de l'une des phases principale ou auxiliaire dudit moteur et une thermistance montée
en parallèle avec cette impédance.

FIG.1

- 1 -

La présente invention concerne des moyens de réglage électrique de la caractéristique hydraulique d'un circulateur de chauffage central.

Il est intéressant que la courbe caractéristique des circulateurs de chauffage central puisse être modifiée pour une meilleure adaptation à l'installation dans laquelle ils doivent fonctionner.

Cette modification peut être réalisée hydrauliquement ou électriquement ou encore à la fois hydrauliquement et électriquement.

Le procédé connu qui consiste à prévoir un by-pass hydraulique entraîne une augmentation du bruit de l'accélérateur et une consommation inutile d'énergie électrique. En conséquence, il est intéressant d'utiliser des moyens électriques de réglage qui, seuls, évitent les deux inconvénients précités. Cependant, pour que la plage de réglage soit suffisante, on est amené à réduire de façon importante la vitesse du moteur, ce qui entraîne une chute importante du couple et en particulier du couple de démarrage. L'un des buts visés par la présente invention est donc de récupérer le couple maximal à chaque démarrage du moteur, quel que soit le réglage prévu pour la caractéristique hydraulique du circulateur.

On sait parfaitement faire varier la vitesse d'un moteur asynchrone monophasé à capacité permanente par différents moyens.

L'un de ces moyens est de modifier les connexions à l'intérieur du bobinage, de prendre tout ou partie de la phase auxilliaire, ou de la phase principale et de réaliser toute une série de combinaisons de ces divers éléments avec le condensateur. Ce moyen nécessite aucun élément supplémentaire si ce n'est un commutateur plus ou moins élaboré. Par contre, soit il conduit à une réduction de couple faible, auquel cas il faut adjoindre un by-pass hydraulique pour le réglage de la caractéristique du circulateur, soit la réduction de couple est importante mais la seule façon de récupérer le couple de démarrage maximal est une action manuelle sur le commutateur.

Un autre moyen connu est de réduire la tension électrique aux bornes du moteur en insérant en série avec celui-ci une impédance variable ou une self ou une résistance ou une capacité ou une combinaison de ces divers éléments.

Dans ce cas, le couple de démarrage maximal est récupéré en courcircuitant ces éléments. Les moyens connus actuellement utilisent soit une bilame (mais celle-ci doit être chauffée artificiellement pour se maintenir en position ouverte lorsque le démarrage a eu lieu), soit un relais électromagnétique avec des inconvénients de prix et d'encombrement.

La présente invention vise à remédier à tous ces inconvénients en permettant la récupération du couple maximal à chaque mise en route d'un circulateur dont le moteur d'entraînement est un moteur asynchrone monophasé à capacité permanente.

A cet effet, les moyens qu'elle concerne comprennent une impédance auxiliaire résistive et/ou capacitive et/ou inductive insérée en série avec au moins tout ou partie l'une des phases principale ou auxiliaire dûdit moteur et une thermistance montée en parallèle avec cette impédance.

Ainsi, au démarrage, la résistance de la thermistance est pratiquement nulle, de sorte que l'impédance auxiliaire est court-circuitée et que le moteur dispose de son couple maximal.

Après un temps très court mais suffisant pour assurer un démarrage correct, le courant provoque l'échauffement de la thermistance dont la résistance croît jusqu'à être comparable à un interrupteur ouvert. L'impédance auxiliaire se trouve alors en série avec la phase principale. Par ailleurs, le courant qui continue de traverser la thermistance est suffisant pour la maintenir à une température qui correspond à son état "ouvert".

De préférence, cette impédance auxiliaire est réglable ce qui permet d'adapter la vitesse lente du circulateur aux caractéristiques de l'installation dans laquelle il est monté.

Dans le cas où l'impédance auxiliaire est constituée par une inductance, elle peut être montée en série avec la phase principale ou la phase auxiliaire ou les phases principales et auxiliaires du moteur.

Lorsqu'elle est réglable, suivant une forme d'exécution simple de l'invention, cette inductance est constituée par une bobine de fil de cuivre ou similaire équipée de plusieurs sorties intermédiaires dont chacune est reliée à l'une des bornes d'un commutateur qui présente trois bornes de plus que le nombre des sorties précitées, dont deux pour recevoir les extrémités de l'inductance et une ne recevant aucune liaison.

Cette inductance peut être placée dans un boîtier en fonte ou similaire et ce boîtier peut être lui-même placé dans la boîte à bornes du moteur ou présenter un alésage central de manière à constituer le coussinet de l'un des paliers du circulateur, des joints annulaires étant prévus pour assurer l'étanchéité voulue.

Avantageusement, le boîtier de l'inductance constitue le coussinet du palier antérieur du circulateur, c'est-à-dire celui situé du côté de la turbine. Ainsi placé, il permet de récupérer les calories dissipées par les courants de Foucault dans le noyau en fonte et par effet Joule dans la bobine.

Dans une variante, le boîtier logeant l'inductance est réalisé dans le corps de pompe du circulateur, qui est lui-même une pièce de fonderie.

Suivant une autre forme d'exécution de l'invention, dans le cas où l'impédance auxiliaire est capacitive et est réglable, elle est constituée de plusieurs condensateurs montés en série et il est prévu un commutateur comprenant autant de bornes de sortie que de condensateurs auxiliaires, plus une, dont chacune est reliée à l'une des bornes de sortie de l'un des condensateurs auxiliaires, dont la borne de sortie supplémentaire n'est reliée à rien et dont la borne d'entrée est reliée à l'une des bornes du circuit

- 4 -

d'alimentation, ainsi qu'à la borne d'entrée du premier condensateur auxiliaire.

Ce commutateur permet donc la mise en service, après la phase de démarrage, de tout ou partie des condensateurs auxiliaires formant l'impédance capacitive auxiliaire ou encore de neutraliser la thermistance et de ne faire fonctionner le moteur qu'à sa vitesse normale.

Suivant une variante d'exécution de l'invention, que l'impédance réglable ou non soit inductive ou capacititve, ces moyens sont regroupés en un ensemble logé dans un boîtier indépendant du circulateur et présentant quatre bornes, dont deux pour le branchement au réseau monophasé d'alimentation et au moins deux pour son raccordement au circuit d'alimentation du moteur d'entraînement du circulateur.

Suivant une forme d'exécution perfectionnée de l'invention, pour permettre la mise en service d'une seconde vitesse lente, plus lente que la première, par exemple pendant la nuit, l'impédance auxiliaire étant inductive ou capacitive et présentant plusieurs sorties entre des éléments montés en série, il est prévu un second commutateur ou commutateur auxiliaire présentant le même nombre de bornes de sortie que le premier ou principal, dont les bornes de sortie se correspondant sont reliées aux mêmes bornes de sortie des éléments montés en série de l'impédance auxiliaire, et dont la borne d'entrée est reliée à l'une des bornes du circuit d'alimentation, ainsi qu'à la borne d'entrée de l'impédance auxiliaire, la borne d'entrée du commutauteur principal étant reliée à celle du commutateur auxiliaire à travers un interrupteur et le commutateur auxiliaire étant réglé pour une vitesse plus lente que le principal.

Ainsi, lorsque l'interrupteur précité est ouvert, le premier commutateur est hors circuit et le moteur fonctionne à la vitesse la plus lente tandis que, s'il est fermé, le second commutateur est court-circuité par le premier et le moteur fonctionne à la vitesse la moins lente.

De préférence, pour permettre un passage automatique de la vitesse la moins lente à la plus lente et inversement, l'interrupteur placé entre les bornes d'entrée des commutateurs est associé à une horloge contrôlant ses heures et durée d'ouverture et de fermeture.

Dans le cas où l'impédance auxiliaire est capacitive, elle peut être montée en série avec la phase principale seule ou avec les phases principale et auxiliaire. Cependant partant du principe connu que la vitesse d'un moteur du type précité est sensiblement réduite si l'on diminue la valeur de la capacité montée en série avec la phase auxiliaire, suivant une forme d'exécution simple de l'invention, cette impédance capacitive auxiliaire est montée en série avec la phase auxiliaire.

Enfin, suivant encore une caractéristique intéressante de l'invention, l'impédance capacitive auxiliaire, son interrupteur sensible à la température ainsi que tous les organes annexes éventuels tels que commutateurs, interrupteurs associés à une horloge ou non, sont rassemblés dans un boîtier indépendant du circulateur et présentant quatre bornes dont deux pour son branchement au réseau monophasé et deux pour son raccordement aux bornes d'alimentation du moteur d'entraînement du circulateur.

De toute façon, l'invention sera bien comprise à l'aide de la description qui suit en référence aux dessins schématiques annexés représentant, à titre d'exemples non limitatifs, quelques formes d'exécution de ces moyens :

Figure 1 montre une forme d'exécution simplifiée des moyens de l'invention ;

Figure 2 montre une forme d'exécution avantageuse des moyens de l'invention dans le cas où l'impédance auxiliaire est inductive.

Figure 3 est une vue en coupe diamètrale d'une inductance auxiliaire conforme à l'exemple illustré par la figure 2 ;

Figures 4 à 6 sont des vues en coupe axiale du circulateur selon l'invention, illustrant plusieurs variantes de positionnement de l'inductance de figure 3 ;

- 6 -

Figure 7 est une vue similaire à figure 2 dans le cas où l'impédance auxiliaire est capacitive ;

Figure 8, 9 et 10 illustrent une forme de réalisation avantageuse de l'invention et trois modes possible de branchement ;

Figure 11 et 12 montrent des variantes d'exécution perfectionnées des exemples illustrés par les figures 2 et 7 ;

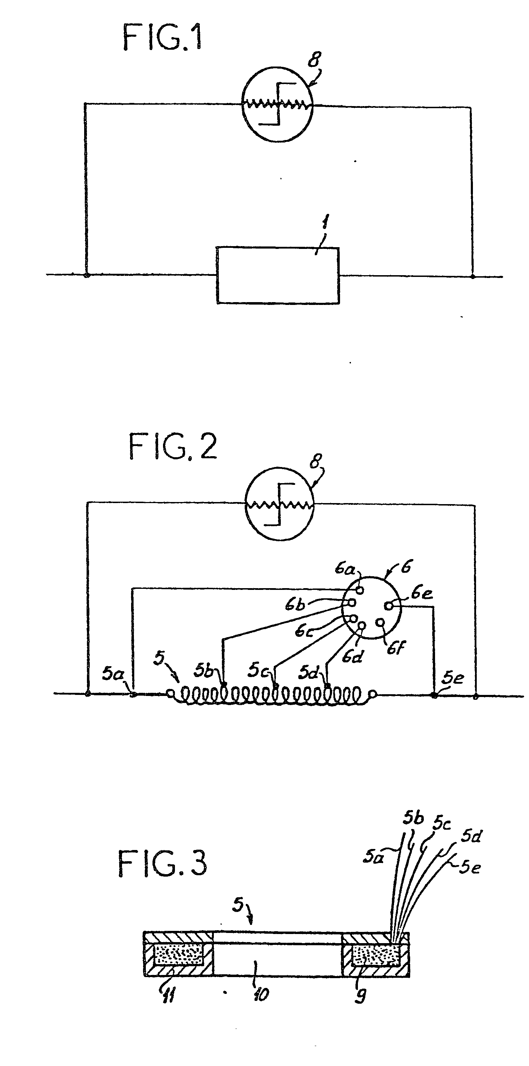

Comme le montre la figure 1, les moyens de l'invention comprennent essentiellement une impédance auxilliaire 1 montée en parallèle avec une thermistance 8 et destinée à être montée en série avec la phase principale ou la phase auxiliaire ou les deux phases principale et auxiliaire du moteur électrique d'entrainement d'un circulateur de chauffage central qui est du type asynchrone monophasé à capacité permanente.

Cette impédance auxiliaire 1 peut être résistive, inductive ou capacitive.

Au démarrage, aucun courant ne l'ayant échauffée, la thermistance 8 présente une résistance très faible par rapport à celle de l'inductance 1 qui, de ce fait, se trouve pratiquement courtcircuitée. Le moteur se comporte donc comme si l'inductance 1 n'existait pas et sa phase de démarrage s'effectue donc dans les mêmes conditions que celles d'un moteur classique de même type que lui.

L'intensité du courant qui traverse la thermistance 8 provoque son échauffement qui, au bout d'un temps très court mais suffisamment long pour assurer un démarrage correct, fait augmenter la résistance de la thermistance 8 qui rapidement devient très supérieure à celle de l'inductance 1. La thermistance, dont la résistance a augmenté considérablement, se comporte alors comme un interrupteur ouvert et l'on peut dire qu'elle a basculé à l'état ouvert. Toute l'intensité du courant, ou presque, traverse alors l'inductance 1 ce qui fait chuter la vitesse du moteur qui fonctionne alors à vitesse lente.

Par ailleurs, bien que faible, l'intensité du courant qui continue de traverser la thermistance 8 suffit à maintenir sa température à une valeur correspondant à son état ouvert. Il faut noter que ce courant est d'ailleurs bien plus faible que celui nécessaire au maintien en échauffement d'une bilame.

On peut noter en outre que le fonctionnement d'une thermistance n'est que faiblement influencé par la température ambiante, ce qui ne peut conduire qu'à une très légère réduction du temps durant lequel l'inductance 1 est court-circuitée. En effet, la thermistance est essentiellement commandée par l'intensité du courant qui la traverse. Cette propriété présente donc l'avantage de disposer du couple de démarrage maximal, non seulement au premier démarrage, lorsque le moteur est froid, mais aussi à chaque démarrage ultérieur, lorsque le moteur est chaud.

En utilisant une impédance auxiliaire réglable on peut adapter la vitesse lente du moteur et donc du circulateur aux caractéristiques de l'installation dans laquelle il est monté.

Dans l'exemple illustré sur la figure 2, l'impédance auxiliaire est réglable et elle est inductive. Elle est donc constituée par inductance 5 prévue avec des sorties multiples, à savoir des sorties d'extrémité 5a et 5e et des sorties intermédiaires 5b, 5c et 5d. Chacune des sorties 5a à 5e est reliée électriquement à une borne, respectivement 6a à 6e d'un commutateur rotatif à gradins 6, qui possède une borne supplémentaire 6f à laquelle n'aboutit aucune liaison électrique. Ce commutateur rotatif permet de relier à la borne 6e l'une quelconque des bornes 6a à 6d ou 6f. Il permet donc de mettre en série avec l'une ou l'autre ou les deux phases du moteur tout ou partie de l'inductance 5, ou encore de la courtcircuiter totalement. En effet, si la borne 6e est reliée à la borne 6f l'inductance 5 est utilisée en totalité. A l'inverse, si la borne 6e est reliée à la borne 6a, l'inductance 5 est totalement courtcircuitée.

Le réglage de la vitesse du moteur d'entraînement de cet accélérateur, et par conséquent de sa caractéristique hydraulique, se fait à l'aide du commutateur rotatif 6, qui permet de mettre en série avec l'une ou les deux phases du moteur tout ou partie de l'inductance 5. Naturellement, la plus grande vitesse est obtenue lorsque l'inductance 5 est totalement courtcircuitée, c'est-à-dire lorsque les bornes 6a et 6e du commutateur sont reliées électriquement l'une à l'autre, les vitesses intermédiaires étant obtenues par les liaisons de la borne 6e à l'une des bornes 6b, 6c ou 6d. Au contraire, la liaison entre les bornes 6e et 6f, qui mettent en série avec la ou les phases considérées du moteur la totalité de l'inductance 5, correspond à la vitesse minimale du moteur.

Dans l'exemple qui vient d'être décrit sont prévues cinq vitesses différentes du moteur, mais il est évident que l'on pourrait en prévoir plus ou moins, si on le désire.

La figure 3 montre une forme d'exécution simple de l'inductance 5, selon laquelle elle est constituée par une bobine en fil de cuivre 9, dont on voit les sorties 5a à 5e, et qui est placée dans un boîtier 11 lui servant de noyau magnétique et qui, de préférence, est réalisée en fonte. Ce boîtier 11 peut évidemment être placé à l'intérieur de la boîte à bornes du moteur ; cependant, dans une forme d'exécution préférée, tel qu'illustré sur la figure 2, ce boîtier présente un alésage central 10 qui permet son utilisation comme palier du moteur.

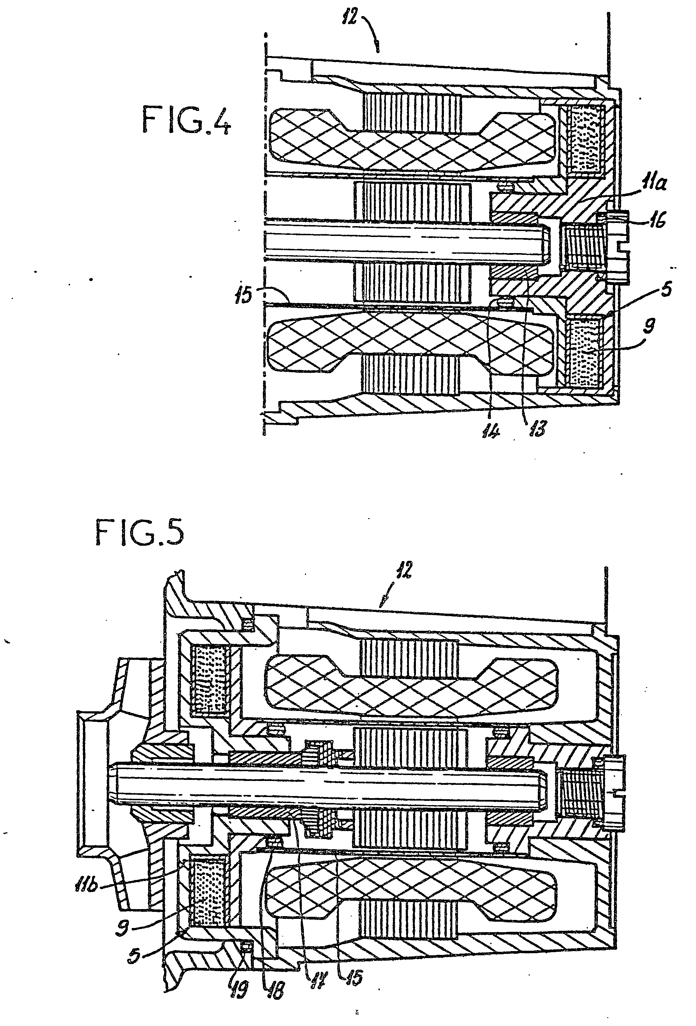

Dans l'exemple illustré sur la figure 4, le boîtier 11a est agencé pour constituer le palier postérieur du moteur désigné par la référence générale 12. A cet effet, un coussinet 13 vient s'emmancher dans l'alésage du boîtier 11a, tandis qu'un joint torique 14 assure l'étanchéité entre le boîtier 11a et la chemise d'entrefer 15. Un second joint torique 16 contribue à parfaire l'étanchéité du palier constitué par le boîtier 11a.

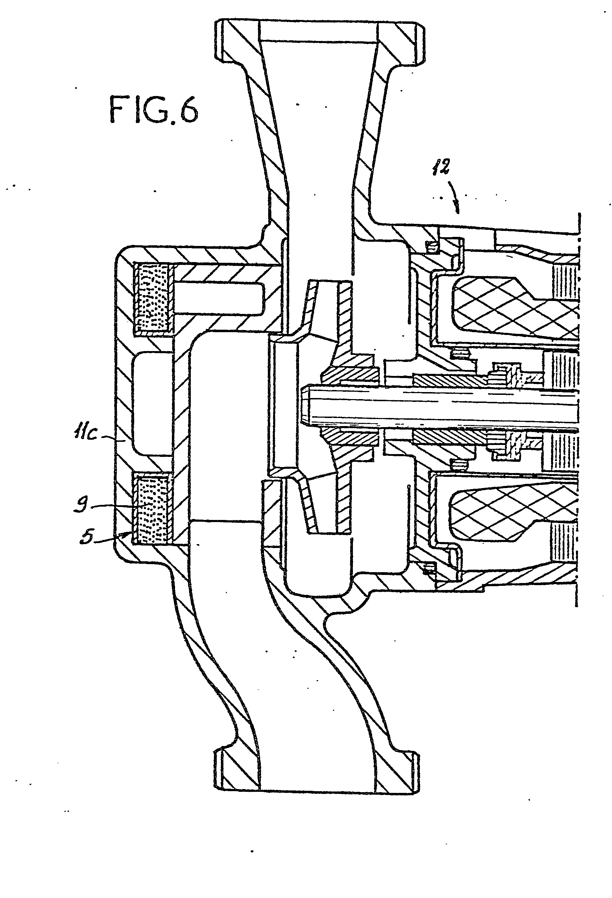

Dans l'exemple illustré par la figure 5, le boîtier 11b de l'inductance 5 constitue le palier antérieur du moteur 12 qui reçoit un coussinet 17, un joint torique 18 assurant l'étanchéité entre le palier 11b et la chemise d'entrefer 15, tandis qu'un second joint torique 19 assure l'étanchéité au niveau du carter du moteur 12.

Cette disposition est préférable à la précédente, car elle présente, par rapport à elle, l'avantage de permettre une récupération des calories dissipées dans le noyau fonte constitué par le boîtier 11b, par les courants de Foucault, ainsi que celles dissipées par l'effet Joule dans la bobine 9. Ces calories sont en effet récupérées par l'eau de l'installation qui traverse le circulateur.

La figure 6 illustre une autre variante de réalisation de l'invention, ou plus précisément une autre disposition possible de l'inductance 5 selon laquelle le boîtier en fonte 11c, dans lequel est logée la bobine 9 de l'inductance 5, est obtenu en fonderie en même temps que le corps du circulateur. Dans cette disposition il n'est pas nécessaire de prévoir un alésage central 12 puisque dans ce cas, le boîtier 11c ne constitue pas un palier du moteur 12. Cette disposition permet, comme la précédente, une récupération tant des calories dissipées par les courants de Foucault, que de celles dissipées par effet Joule.

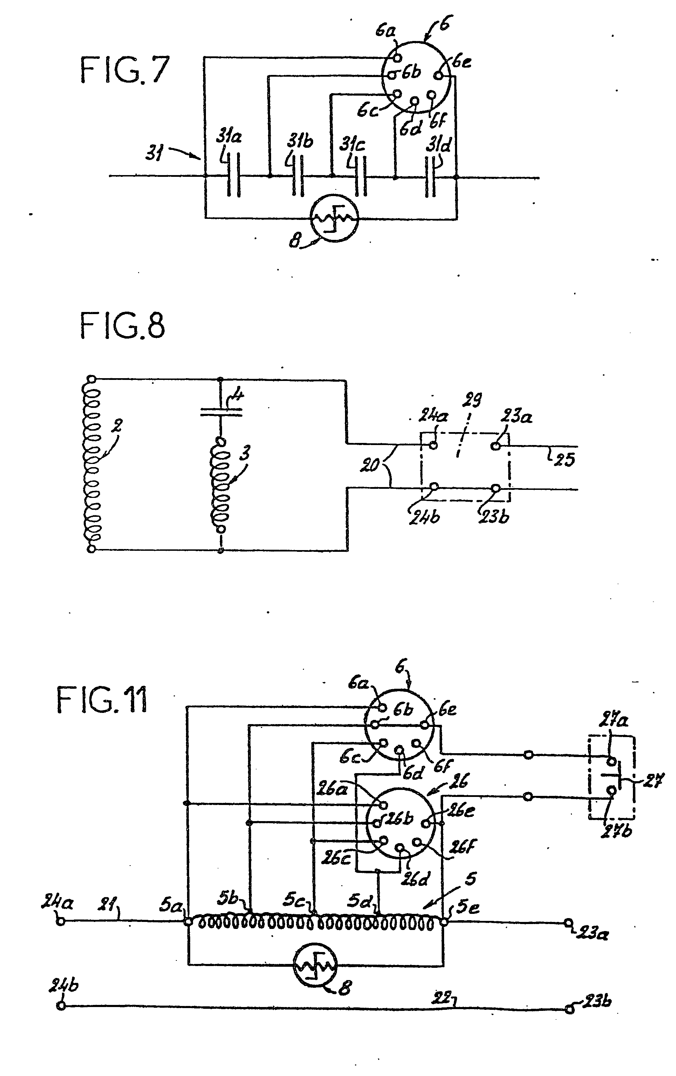

La figure 7 illustre une variante d'exécution des moyens illustrés par la figure 2. Dans cette variante, l'impédance auxiliaire réglable est une impédance capacitive 31 constituée par plusieurs condensateurs 31a à 31d, quatre dans cet exemple, montés en série, l'ensemble des condensateurs 31a à 31d étant lui-même monté en parallèle avec la thermistance 8.

Comme le montre cette figure, la borne d'entrée du condensateur 31d, c'est-à-dire celui le plus proche de la borne 23a, est reliée à la borne d'entrée 6e du commutateur 6 comportant cinq autres sorties 6a à 6d et 6f, c'est-à-dire une sortie de plus que les condensateurs 31a à 31d. Les sorties 6a à 6d sont connectées chacune à l'une des bornes de sortie de l'un des condensateurs 31a à 31d, tandis que la borne ne comporte aucune connection. Par le choix de la position du commutateur 6, on peut donc déterminer le nombre des condensateurs 31a à 31d qui seront en service après la phase de démarrage du moteur, c'est-à-dire lorsque la thermistance $\underline{8}$ se comportera comme un interrupteur ouvert.

Suivant une autre forme d'exécution de l'invention, les moyens qu'elle concerne constituent un ensemble logé dans un boîtier indépendant du circulateur susceptible d'être monté en série sur le circuit d'alimentation d'un circulateur qui est lui-même du type à vitesse lente en vue de permettre le réglage de sa caractéristique hydraulique.

Dans les exemples illustrés sur les figures 8 à 10, cet ensemble est désigné par la référence $\underline{29}$. Sur ces figures on a représenté la phase principale du moteur constituée par une inductance $\underline{2}$ et sa phase auxiliaire comprenant une inductance $\underline{3}$ montée en série avec un condensateur $\underline{4}$, les conducteurs $\underline{25}$ étant ceux du réseau d'alimentation.

L'ensemble $\underline{29}$ présente quatre bornes de branchement, $\underline{23a}$, $\underline{23b}$, $\underline{24a}$ et $\underline{24b}$, dont les deux premières sont connectées aux conducteurs $\underline{25}$ du réseau.

Les bornes $\underline{23b}$ et $\underline{24b}$ sont reliées l'une à l'autre par un conducteur $\underline{22}$. Les bornes $\underline{23a}$ et $\underline{24a}$ correspondant aux bornes d'entrées et de sorties communes de l'impédance auxiliaire $\underline{1}$, inductive ou capacitive, réglable ou non, et de la thermistance $\underline{8}$, peuvent être connectées par des conducteurs $\underline{20}$ de différentes manières au moteur du circulateur.

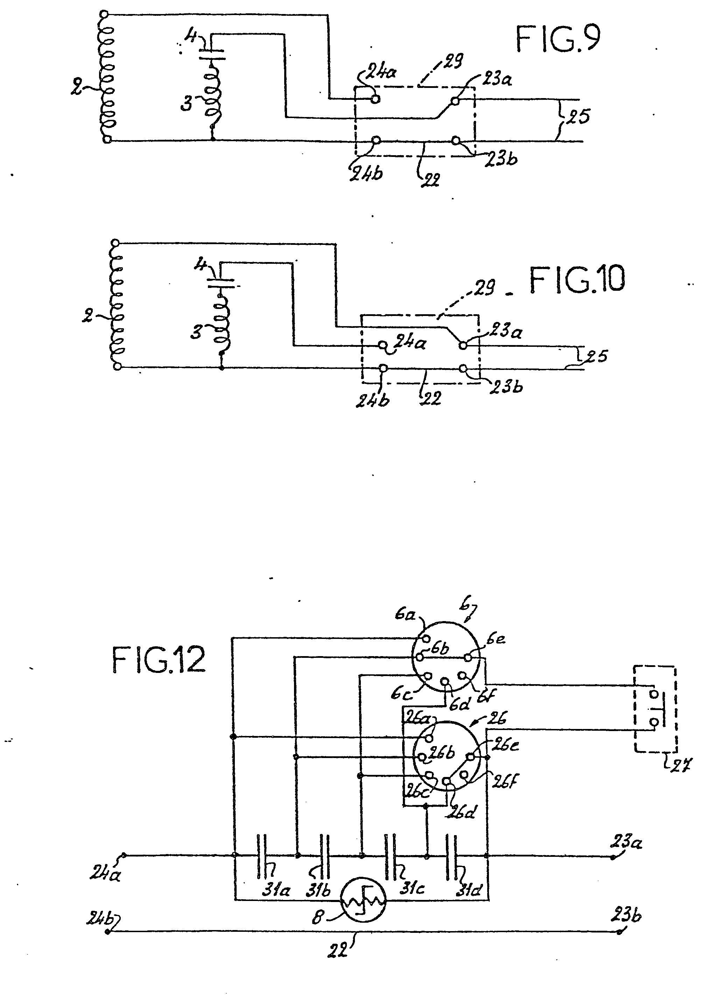

Avec le branchement illustré par la figure 8, l'impédance auxiliaire est montée en série avec les deux phases auxiliaire et principale du moteur. Avec celui illustré par la figure 9, elle n'est montée en série qu'avec la phase principale tandis qu'avec le branchement illustré par la figure 10, l'impédance auxiliaire est montée en série avec la phase auxiliare.

On voit donc que ces moyens constituent un ensemble autonome susceptibles d'être interposé entre le réseau d'alimentation et le circuit d'alimentation du moteur d'entraînement du circulateur à vitesse constante en vue de permettre le réglage de sa vitesse en fonction de ses conditions d'utilisation.

La figure 11 illustre une variante d'exécution des moyens de figure 2 qui tout en jouissant des mêmes caractéristiques d'autonomie et par conséquent des mêmes possibilités de branchement que celles illustrées par les figures 8
à 10, présente une modification avantageuse.

Suivant cette modification, il est prévu, outre le
commutateur 6 et ses bornes 6a à 6f un commutateur auxiliaire
26 présentant le même nombre de bornes d'entrée ot de sortie,
c'est-à-dire six bornes 26a à 26f, soit une borne d'entrée
26e reliée à la borne d'entrée 5e de l'inductance 5, une
borne de sortie 26a reliée, comme la borne 6a du commutateur
6, à la borne de sortie 5a de l'inductance 5, et trois
bornes de sortie intermédiaires 26b à 26d reliées, comme
les bornes de sortie intermédiaires 6b à 6d du commutateur
6 aux bornes de sortie intermédiaires 5b à 5d de l'inductance 5. Le commutateur auxiliaire 26 présente en outre une
borne de sortie isolée 26f.

Par ailleurs, la borne d'entrée 26e du commutateur 26
est reliée à l'un 27a des pôles d'un interrupteur 27 dont
l'autre pôle 27b est relié à la borne d'entrée 6e du commutateur 6.

Comme on le voit, lorsque l'interrupteur 27 est en
position d'ouverture, le commutateur 6 est mis hors circuit.
Au contraire, lorsque l'interrupteur 27 est fermé, les deux
commutateurs 6 et 26 sont montés en parallèle et le fonctionnement du moteur du circulateur correspond au réglage du
commutateur le plus favorable, c'est-à-dire dont le réglage
propre correspond au plus petit nombre de tronçons de l'inductance 5 montée en série sur le circuit d'alimentation
de ce moteur.

Dans l'exemple illustré sur la figure 11, le réglage
le plus favorable est celui du commutateur 6 dont la mise
en service correspond à l'insertion dans le circuit d'alimentation du seul tronçon de l'inductance 5, à savoir celui
situé entre les sorties 5a et 5b.

Au contraire, le réglage du commutateur 26 est moins
favorable puisqu'il correspond à l'insertion dans le circuit
d'alimentation de trois éléments de l'inductance 5, à savoir ceux contenus entre les bornes 5a et 5d de cette impédance.

Le réglage du commutateur 6 correspond donc à une vitesse légèrement plus lente que la vitesse normale du moteur d'entraînement du circulateur tandis que celui du commutateur 26 correspond à une vitesse très lente convenant par exemple, pour des périodes où le chauffage peut être notablement réduit, tels que durant la nuit ou durant l'inoccupation prolongée du local concerné.

Pour obtenir un chauffage normal, c'est-à-dire un fonctionnement avec la vitesse la moins lente du circulateur, il suffit de fermer l'interrupteur 27 de telle sorte que le commutateur 26 se trouve pratiquement courtcircuité par le commutateur 6. Si l'on souhaite fonctionner avec une vitesse très lente correspondant à une réduction notable du chauffage, on peut alors ouvrir l'interrupteur 27 mettant hors circuit le commutateur 6, de telle sorte que l'installation fonctionne suivant le réglage du commutateur 26.

L'interrupteur 27 peut être évidemment un interrupteur à commande manuelle mais il peut aussi être avantageusement un interrupteur contrôlé par une horloge ce qui, évidemment, n'exclut pas la commande manuelle.

La forme d'exécution illustrée par la figure 12 est l'application de celle illustrée par la figure 11 au cas où l'impédance est capacitive. Cette figure 12 montre donc un perfectionnement de la forme d'exécution illustrée par la figure 7. Comme celui illustré par la figure 11, ce perfectionnement permet de conserver à l'ensemble 29 son caractère autonome et indépendant.

Suivant cette forme d'exécution perfectionnée, comme dans l'exemple illustré par la figure 7, le condensateur auxiliaire 31 est constitué de quatre condensateurs 31a à 31d, mais il est prévu deux commutateurs, à savoir : le commutateur 6 identique à celui de la figure 2, et dont les bornes de sortie 6a à 6d sont connectées aux bornes de sortie des condensateurs 31a à 31d de la même manière que dans l'exemple précité, et dont la borne de sortie 6f ne comporte aucune connection, et un second commutateur 26 identique au premier commutateur 6 et dont les bornes de sortie 26a à 26d sont reliées, comme les sorties correspondantes du condensateur 6, aux bornes de sortie des condensateurs 31a à 31d. La borne de sortie 26f de ce second commutateur 26 ne porte également aucune connection.

La borne d'entrée 26e du commutateur 26 est connectée, comme la borne d'entrée du condensateur 31d, à la borne d'entrée 23a de l'ensemble.

Par ailleurs, cette borne d'entrée 26e du commutateur 26, est connectée à la borne d'entrée 6e du commutateur 6 par l'intermédiaire d'un interrupteur 27.

Comme cela est visible sur la figure 12, lorsque l'interrupteur 27 est en position d'ouverture, le commutateur 6 est mis hors circuit et le moteur fonctionne, après sa phase de démarrage, à la vitesse correspondant au réglage prescrit par le commutateur 26.

Par contre, losque l'interrupteur 27 est en position de fermeture, les deux commutateurs 6 et 26 sont montés en parallèle et le fonctionnement du moteur du circulateur correspond au réglage le plus favorable des deux commutateurs c'est-à-dire dont le réglage correspond auplus petit nombre de condensateurs 31a à 31d mis en service.

Dans l'exemple illustré sur la figure 12, le réglage le plus favorable est celui du commutateur 6 dont la mise en service correspond à l'insertion dans le circuit d'alimentation du seul condensateur 31a.

Au contraire, le réglage du commutateur 26 est moins favorable puisqu'il correspond à l'insertion dans le cire cuit d'alimentation de trois condensateurs 31a à 31c.

Ainsi, comme dans l'exemple illustré par la figure 11, le réglage du commutateur 6 correspond donc à une vitesse moins lente que le réglage du commutateur 26 dont la vitesse très lente convient, par exemple, pour des périodes durant lesquelles le chauffage peut être notablement réduit.

Par conséquent, lorsque l'on veut un fonctionnement normal, il suffit de maintenir l'interrupteur 27 en position de fermeture. Par contre, si l'on souhaite un fonctionnement à vitesse très lente, par exemple pendant la nuit, il suffit d'ouvrir l'interrupteur 27.

Cet interrupteur 27 peut évidemment être un interrupteur à commande manuelle, mais il peut aussi, comme dans l'exemple précédent, être un interrupteur contrôlé par une horloge, ce qui, évidemment, n'exclut pas la commande manuelle.

Comme il va de soi et comme il ressort de ce qui précède, l'invention ne se limite pas aux seules formes d'exécution qui ont été décrites ci-dessus à titre d'exemples non limitatifs ; elle en embrasse, au contraire, toutes les variantes de réalisation.

REVENDICATIONS

1. - Moyens de réglage électrique de la caractéristique hydraulique d'un circulateur de chauffage central dont l'entraînement est assuré par un moteur asynchrone monophasé à capacité permanente, caractérisé en ce qu'ils comprennent une impédance auxiliaire résistive (1,5,31) et/ou capacitive, et/ou inductive, insérée en série avec au moins tout ou partie de l'une des phases principale (2) ou auxiliaire (3,4) dudit moteur et une thermistance (8) montée en parallèle avec cette impédance.

2. - Moyens selon la revendication 1, caractérisés en ce que l'impédance auxiliaire (1,5,31) est réglable.

3. - Moyens selon la revendication 2, caractérisés en ce que l'impédance auxiliaire [1] est inductive et elle est constituée par une bobine de fil de cuivre ou similaire (5) équipée de plusieurs sorties intermédiaires (5b,5c, 5d) dont chacune est reliée à l'une des bornes (6b,6c,6d) d'un commutateur qui présente trois bornes de plus que le nombre de sorties précitées, dont deux (6a,6e) pour recevoir les extrémités (5a,5e) de l'inductance (5) et une (6f) ne recevant aucune liaison.

4. - Moyens selon la revendication 3, caractérisés en ce que l'inductance (5) est placée dans un boîtier (11) en fonte ou similaire.

5. - Moyens selon la revendication 4, caractérisés en ce que le boîtier (11) est placé dans la boîte à bornes du moteur.

6. - Moyens selon la revendication 4, caractérisés en ce que le boîtier (11a,11b) constitue l'un des paliers du moteur 12, des joints annulaires (14,16,18,19) étant prévus pour assurer l'étanchéité voulue.

7. - Moyens selon la revendication 6, caractérisés en ce que le boîtier (11b) de l'inductance (5) constitue le coussinet du palier antérieur du circulateur, c'est-à-dire celui situé du côté de la turbine.

8. - Moyens selon la revendication 4, caractérisés en ce que le boîtier (11c) logeant l'inductance (5) est réalisé dans le corps de pompe du circulateur qui est lui-même une pièce de fonderie.

9. - Moyens selon la revendication 2, caractérisés en ce que l'impédance auxiliaire (31) est capacitive et elle est constituée de plusieurs condensateurs auxiliaires (31a, à 31 d) montés en série, et il est prévu un commutateur (6) comprenant autant de bornes de sortie (6a à 6d) que de condensateurs auxiliaires (31a à 31d), plus une (6f) dont chacune est reliée à l'une des bornes de sortie de l'un des condensateurs auxiliaires, dont la borne de sortie supplémentaire (6f) n'est reliée à rien et dont la borne d'entrée (6e) est reliée à l'une des bornes (23a) du circuit d'alimentation, ainsi qu'à la borne d'entrée du premier condensateur auxiliaire (31d).

10. - Moyens selon l'une quelconque des revendications 1 à 3 et 9 caractérisés en ce qu'ils sont regroupés en un ensemble logé dans un boîtier indépendant du circulateur et présentant quatre bornes (23a, 23b, 24a, 24b) dont deux (23a et 23b) pour le branchement au réseau monophasé (25) d'alimentation et au moins deux (24a et 24b) pour son raccordement au circuit d'alimentation du moteur d'entraînement du circulateur.

11. - Moyens selon la revendication 3 ou la revendication 10 caractérisés en ce que dans le cas où l'impédance auxiliaire est constituée par une inductance (5) elle même constituée par une bobine équipée de plusieurs sorties intermédiaires (5b, 5c, 5d) dont chacune est reliée à l'une des bornes (6b, 6c, 6d) d'un commutateur (6) qui présente trois bornes de plus que le nombre de sorties précitées, dont deux (6a et 6e) pour recevoir les extrémités (5a et 5e) de l'inductance (5) et une (6f) ne recevant aucune liaison, d'une part, il est prévu un second commutateur (26) identique au premier et dont les bornes de sorties (26a, 26b, 26c, 26d, 26e) sont connectées, de la même manière que celles du premier, aux bornes de sorties de l'inductance et dont la borne d'entrée (26e) est connectée à l'une (23a) des bornes du réseau, à la borne d'entrée (5e) de l'inductance (5) et à l'une (27b) des bornes d'un interrupteur (27) dont la fermeture correspond à la vitesse la moins lente, dont l'autre borne (27a) est connectée à la borne d'entrée (6e) du premier commutateur (6) et, d'autre part, le second commutateur (26) est réglé pour une vitesse plus lente que le premier.

12. - Moyens de réglage selon la revendication 9 ou la revendication 10 caractérisés en ce qu'il est prévu un second commutateur (26) ou commutateur auxiliaire présentant le même nombre de bornes de sortie (26a à 26d, 26f) que le premier (6) ou principal, dont les bornes de sortie (26a à 26d) se correspondant sont reliées aux mêmes bornes des mêmes condensateurs auxiliaires (31a à 31d) formant l'impédance capacitive auxiliaire, et dont la borne d'entrée (26e) est reliée à l'une (23a) des bornes du circuit d'alimentation, ainsi qu'à la borne d'entrée du premier condensateur auxiliaire (31d), la borne d'entrée (6e) du commutateur principal (6) étant reliée à celle (26e) du commutateur auxiliaire à travers un interrupteur (27) et le commutateur auxiliaire (26) étant réglé pour une vitesse plus lente que le principal (6).

13. - Moyens de réglage selon la revendication 11 ou la revendication 12, caractérisés en ce que l'interrupteur (27) placé entre les bornes d'entrée (6e et 26e) des commutateurs (6 et 26) est associé à une horloge contrôlant ses heures et durées d'ouverture et de fermeture.

# FIG.1

# FIG.2

# FIG.3

FIG.4

FIG.5

FIG.6

12

11c

9

5

FIG.7

FIG.8

FIG.11

0023465

FIG.9

FIG.10

FIG.12

| Catégorie | Citation du document avec indication, en cas de besoin, des parties pertinentes | Revendication concernée |
|---|---|---|
| | **DOCUMENTS CONSIDERES COMME PERTINENTS** | |
| X | <u>FR - A - 2 137 388</u> (CALPEDA) <br> * Page 3, ligne 27 - page 4, ligne 4; figures 4-9 * | 1-3,10 |
| | -- | |
| | <u>FR - A - 1 136 276</u> (PHILIPS GLOEI-LAMPENFABRIEKEN) <br> * Page 2, colonne de gauche, ligne 14 - colonne de droite, ligne 20; figures 1,2 * | 1-3,9 |
| | -- | |
| | <u>FR - A - 1 493 077</u> (UNELEC) <br> * Page 2, colonne de droite, lignes 8-22; figure 6 * | 1,2 |
| | -- | |
| | <u>US - A - 1 944 090</u> (GENERAL ELECTRIC) <br> * Page 1, ligne 100 - page 2, ligne 15; figure 3 * | 1,2 |
| | -- | |
| | <u>GB - A - 421 595</u> (HOWELL ELECTRIC MOTORS) <br> * Page 1, ligne 79 - page 2, ligne 66; figure 1 * | 4,5 |
| | --- | |

**CLASSEMENT DE LA DEMANDE (Int Cl ³)**

H 02 P   7/40
F 24 D  19/10

**DOMAINES TECHNIQUES RECHERCHES (Int. Cl. ³)**

H 02 P   1/44
         7/40
         7/62
F 24 D  19/10
H 02 K  17/30

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 04-11-1980 | WEIHS |

OEB Form 1503.1  06.78

BAD ORIGINAL